# EUROPÄISCHE PATENTSCHRIFT

(11) **EP 1 567 856 B1**
(45) Veröffentlichungstag und Bekanntmachung des Hinweises auf die Patenterteilung: **26.09.2018**
(21) Anmeldenummer: 03783822.4
(22) Anmeldetag: 08.08.2003
(51) Int. Cl.: G01N 27/60

(54) **VERFAHREN UND VORRICHTUNG ZUR BESTIMMUNG DES STRÖMUNGSPOTENTIALS BZW. ZETA-POTENTIALS**
METHOD AND DEVICE FOR DETERMINING A FLOW POTENTIAL OR ZETA POTENTIAL
PROCEDE ET DISPOSITIF POUR DETERMINER LE POTENTIEL D'ECOULEMENT OU POTENTIEL ZETA

(30) Priorität: 09.08.2002 AT 12102002
(43) Veröffentlichungstag der Anmeldung: 31.08.2005
(73) Patentinhaber: DataPhysics Instruments GmbH, 70794 Filderstadt (DE)
(72) Erfinder: RIBITSCH, Volker, A-8010 Graz (AT); ZAISMANN, Ursula, A-8061 St. Radegund (AT)
(74) Vertreter: Kuhnen & Wacker Patent- und Rechtsanwaltsbüro PartG mbB
(86) Internationale Anmeldenummer: PCT/AT2003/000228
(87) Internationale Veröffentlichungsnummer: WO 2004/015410

(56) Entgegenhaltungen:
- EP-A- 0 462 703
- WO-A-86/00707
- WO-A-97/36173
- WO-A-98/45029
- DE-A- 4 345 152
- DE-U- 20 209 563
- US-A- 4 297 640
- US-A- 4 535 285
- US-A- 5 408 185
- PATENT ABSTRACTS OF JAPAN vol. 007, no. 093 (P-192), 19. April 1983 (1983-04-19) & JP 58 018157 A (SHIMAZU SEISAKUSHO KK), 2. Februar 1983 (1983-02-02)
- SCHEMMP W: "Messtechnische Möglichkeiten und Grenzen der Erfassung von Zeta-potentialen verschiedener Produktgruppen", IPW INTERNATIONAL PAPER WORLD, DPW VERLAGSGESELLSCHAFT MBH, HEUSENSTAMM, DE, vol. 29, no. 12, 1 January 1975 (1975-01-01), pages 514-519, XP008127715, ISSN: 0031-1340
- CARDWELL ET AL: "Adsorption studies using a streaming current detector", 1 November 1966 (1966-11-01), JOURNAL OF COLLOID AND INTERFACE SCIENCE, ACADEMIC PRESS, NEW YORK, NY, US LNKD- DOI:10.1016/0021-9797(66)90088-9, PAGE(S) 430 - 437, XP024187311, ISSN: 0021-9797 [retrieved on 1966-11-01]
- A. SCHAUSBERGER ET AL.: "Beitrag zur Messung des elektrokinetischen Potentials von Celluloseprodukten nach der Strömungsstrom/ Strömungspotential-Methode", DIE ANGEWANDTE MAKROMOLEKULARE CHEMIE, vol. 80, 1979, pages 1-18,
- H.-J. JACOBASCH ET AL.: "Problems and results of zeta-potential measurements on fibers", COLLOID & POLYMER SCIENCE, vol. 263, 1985, pages 3-24,

## Beschreibung

Die vorliegende Erfindung bezieht sich auf ein Verfahren zur Bestimmung des Strömungspotentials bzw. Zeta-Potentials zur Charakterisierung des Oberflächenladungsverhaltens von makroskopischen Festkörpern, wobei eine Flüssigkeit (Elektrolytlösung) relativ zum Festkörper mit sich änderndem Druck bewegt wird. Die Erfindung bezieht sich weiters auf eine Vorrichtung zur Ermittlung des Strömungspotentials bzw. Zeta-Potentials zur Charakterisierung des Oberflächenladungsverhaltens von makroskopischen Festkörpern, wobei in einer Meßzelle zur Aufnahme dieser makroskopischen Festkörper sowie der Elektrolytlösung zwei Elektroden vorgesehen sind und die Flüssigkeit einer Druckbeaufschlagung unterworfen ist.

Befinden sich Festkörper in Kontakt mit Flüssigkeiten, liegt an der Phasengrenze zwischen dem Festkörper und der Flüssigkeit eine andere Verteilung elektrischer Ladungsträger vor als im Inneren der festen bzw. flüssigen Phase, so daß es zur Ausbildung einer elektrischen Doppelschicht, bestehend aus einem immobilen (starren) und einem diffusen Teil, kommt. Das Potential an der Grenze zwischen der immobilen Schicht und dem diffusen Teil der Doppelschicht wird allgemein als elektrokinetisches Potential oder Zeta-Potential bezeichnet. Das sogenannte elektrokinetische Potential ergibt sich hiebei daraus, daß bei einer Relativbewegung der festen zur flüssigen Phase die Ladungsträger der diffusen Schicht am Festkörper bewegt werden, so daß infolge der Relativbewegung zwischen festen und beweglichen Teilen der elektrochemischen Doppelschicht eine Potentialdifferenz entsteht, welche als Strömungspotential bezeichnet wird. Falls an dem von einem Feststoff bzw. Festkörper und einer Flüssigkeit gebildeten System ein elektrisches Feld angelegt wird, tritt eine sogenannte elektrophoretische Wanderung dispergierter Partikel bzw. eine elektroosmotische Flüssigkeitsüberführung durch ein fixiertes Kapillarsystem auf, so daß aus dieser Flüssigkeitsüberführung bzw. der Wanderungsgeschwindigkeit wiederum das Strömungspotential ermittelt werden kann.

Durch Ermitteln des Strömungspotentials bzw. des daraus ableitbaren Zeta-Potentials können Aussagen über die chemische und physikalische Struktur von Festkörperoberflächen bei bekannter, eingesetzter Flüssigkeit oder über die Zusammensetzung einer Flüssigkeit bei bekanntem Feststoff bzw. Festkörper sowie allgemein über die Wechselwirkung zwischen Festkörperoberflächen und Bestandteilen der Flüssigkeit getroffen werden.

Die Bestimmung des Strömungspotentials bzw. Zeta-Potentials findet hiebei beispielsweise in der Untersuchung von Festkörpern sowie der Überprüfung von Flüssigkeiten, beispielsweise in der Werkstofforschung, der Warenforschung oder Diagnosetechnik, Verwendung, wobei durch Ermitteln des Strömungspotentials bzw. Zeta-Potentials auch beispielsweise auf aufwendigere Verfahren im Hinblick auf die Bestimmung einer Oberflächenspannung von Flüssigkeiten verzichtet werden kann.

Bei einer erzwungenen Strömung einer Flüssigkeit durch eine Meßzelle bzw. allgemein entlang eines immobilisierten Festkörpers entsteht ein Strömungspotential bzw. Strömungsstrom, wobei aus einer Ermittlung der elektrischen Größen Spannung bzw. Strom mit geeigneten Elektroden sowie des Differenzdruckes der vorbeiströmenden Flüssigkeit und in Kenntnis der Ausbildung der Meßzelle bzw. Kapillare unmittelbar ein Zusammenhang mit dem Zeta-Potential abgeleitet werden kann. Da zur Ermittlung des zeta-Potentials eine Spannung bzw. ein Strom relativ zu einer Druckdifferenz bzw. einer Druckrampe erfaßt werden muß, ist bei bekannten Ausbildungen zur Bestimmung des Strömungspotentials bzw. zeta-Potentials eine aufwendige und zeitraubende Messung erforderlich, bei welcher die zu untersuchende Flüssigkeit mit unterschiedlichem Druck relativ zu der Festkörperoberfläche durch die Meßzelle bzw. Kapillare bewegt wird, um nach Erhalt der Meßgrößen Spannung bzw. Strom und dem bekannten Druckunterschied zwischen einzelnen Meßpunkten in weiterer Folge das Strömungspotential bzw. daraus das Zeta-Potential ableiten zu können. Es ist unmittelbar einsichtig, daß ein derartiges Verfahren nicht nur äußerst zeitaufwendig und die Überwachung der Druckänderung kompliziert ist, sondern auch eine entsprechend große Menge der zu untersuchenden Flüssigkeit somit zur Verfügung gestellt werden muß, da ein kontinuierlicher bzw. mehrfacher Durchtritt bei unterschiedlichem Druck der zu untersuchenden Flüssigkeit durch die Meßzelle zwischen den Elektroden sichergestellt werden muß.

Aus der EP 462 703 ist ein verfahren und eine Vorrichtung zum Messen eines elektrischen Charakteristikums einer Faserdispersion bekannt geworden, bei welchen eine Dispersion eines Feststoffs, insbesondere eines faserigen Feststoffs nach Durchleiten durch ein Sieb, auf welchem ein Kissen des Feststoffmaterials ausgebildet wird und das charakteristische Merkmal der Dispersion in einer Meßkammer gemessen wird, wobei der Druck auf der Seite des Siebs auf einem vorbestimmten Wert in Bezug auf den Druck auf der anderen Seite des Kissens während der Messung dieses kennzeichnenden Merkmals gehalten wird.

Aus dem Dokument A. Schausberger und J. Schurz "Beitrag zur Messung des elektrokinetischen Potentials von Celluloseprodukten nach der Strömungsstrom/Strömungspotential-Methode", Die Angewandte Makromolekulare Chemie 80 (1979) 1-18 (Nr. 1225) ist ein verfahren, welches eine kontinuierliche Druckrampe aufbringt, entnehmbar.

Der US 4 535 285 ist eine Vorrichtung zur Bestimmung eines elektrischen Charakteristikums einer Faserdispersion unter Aufbringung einer kontinuierlichen Druckrampe entnehmbar. Auch P.H. Cardwell "Adsorption Sudies Using a Streaming Current Detector", Journal of Colloid and Interface Science 22, 430 - 437 (1966), ist ein Verfahren zur Untersuchung der Adsorption beschrieben, in welchem die Detektion durch eine Strömungstechnik durchgeführt wird. Bei diesem Verfahren wird ein Relativwert eines Strömungspotentials durch Titration mit einem Polyelektrolyten gegenteiliger Ladung auf 0 mV gebracht und aus der Menge der benötigten Polyelektrolyten bekannter Konzentration quantitativ die Menge der Ladungen in der Vorlage bestimmt.

Die US-A 5 408 185 betrifft eine Vorrichtung für eine automatisierte Polyelektrolyt-Messung, wobei in einem Probenbehälter eine gelöste Teilchen bzw. Partikel enthaltende Flüssigkeit bewegt wird, um in weiterer Folge eine Ladungsverlagerung der in der Flüssigkeit enthaltenen bzw. gelösten Partikel relativ zu zwei Elektroden zu ermitteln. In ähnlicher Weise erfolgt gemäß der US-A 4 907 453 eine Analyse einer Kolloidprobe, indem eine ein Kolloid bzw. gelöste Partikel enthaltende Flüssigkeit akustischen bzw. Schallwellen unterworfen wird, um dadurch das Vibrationspotential der akustisch angeregten, kolloidalen Lösung zu erhalten. Aus der US-A 4 961 147 sowie der US-A 5 119 029 ist jeweils die Ermittlung des Potentials einer in einer Probenkammer aufgenommenen Flüssigkeit bekannt, in welcher zu untersuchende Materialien bzw. dispergierte Partikel von mikroskopischer oder submikroskopischer Abmessung dispergiert bzw. gelöst sind.

Die vorliegende Erfindung zielt daher darauf ab, ein Verfahren und eine Vorrichtung der eingangs genannten Art dahingehend weiterzubilden, daß bei vereinfachtem Aufbau und insbesondere vereinfachter und verkürzter Verfahrensführung eine rasche und genaue Bestimmung des Strömungspotentials bzw. Zeta-Potentials von makroskopischen Festkörpern möglich wird.

Zur Lösung dieser Aufgaben ist das erfindungsgemäße Verfahren der eingangs genannten Art im wesentlichen dadurch gekennzeichnet, daß die Flüssigkeit, z.B. eine Elektrolytlösung einer oszillierenden bzw. sich periodisch mit einer Frequenz von maximal 100 Hz, insbesondere maximal 20 Hz ändernden Druckbeaufschlagung unterworfen wird und der jeweilige Druck und das Strömungspotential ermittelt bzw. aufgezeichnet werden. Dadurch, daß erfindungsgemäß die Flüssigkeit einer oszillierenden bzw. sich periodisch mit einer Frequenz von maximal 100 Hz, insbesondere maximal 20 Hz ändernden Druckbeaufschlagung unterworfen wird, kann auf das bei bekannten Verfahren und Vorrichtungen notwendige Erfordernis eines kontinuierlichen bzw. mehrfachen Durchleitens einer großen Menge der untersuchenden Flüssigkeit bei unterschiedlichen Druckverhältnissen verzichtet werden, da die sich zwischen den Elektroden und somit in einer Meßzelle bzw. Kapillare befindliche Flüssigkeit einer entsprechenden periodischen Druckbeaufschlagung unterworfen wird und somit lediglich eine Menge entsprechend dem Innenvolumen der Meßzelle bzw. Kapillare zwischen den Elektroden zur Verfügung gestellt werden muß. Durch eine derartige Beschränkung der maximalen Frequenz der oszillierenden bzw. sich ändernden Druckbeaufschlagung wird sichergestellt, daß Phasenverschiebungen nicht zu erwarten sind, so daß mit einer einfachen Auswertung, insbesondere ohne zusätzliche Korrekturen das Auslangen gefunden werden kann. Durch die erfindungsgemäß vorgeschlagene Ermittlung bzw. Aufzeichnung des Strömungspotentials bei den durch die periodische Druckbeaufschlagung erzielbaren, sich jeweils wechselnden Druckverhältnissen wird somit in rascher Weise das Strömungspotential bei unterschiedlichen Druckverhältnissen ermittelt, wobei darüber hinaus bei einem Vorsehen von mehreren Zyklen einer periodischen Druckbeaufschlagung auch eine entsprechende Verbesserung der Genauigkeit bei der Ermittlung des Strömungspotentials bzw. des daraus ableitbaren Zeta-Potentials durch eine Mittelung über eine Mehrzahl von Meßzyklen erzielbar ist. Es läßt sich somit in einfacher Weise das Strömungspotential bzw. Zeta-Potential von makroskopischen, nicht bewegten Festkörpern durch die erfindungsgemäß vorgeschlagene Beaufschlagung bzw. Bewegung der Flüssigkeit bzw. Elektrolyt-Lösung ermitteln.

Gemäß einer besonders bevorzugten Ausführungsform wird vorgeschlagen, daß die oszillierende bzw. sich periodisch ändernde Druckbeaufschlagung durch einen über einen Exzenter angetriebenen Kolben oder einen insbesondere elektrodynamisch angetriebenen Schwingerreger aufgebracht wird, wobei in Kenntnis der Bewegung der zur Aufbringung der oszillierenden bzw. sich ändernde Druckbeaufschlagung eingesetzten Vorrichtung unmittelbar der jeweils auf die Flüssigkeit wirkende, sich periodisch ändernde Druck bekannt bzw. ermittelbar ist und somit insbesondere die Auswertung vereinfacht wird.

Zur Erzielung einer entsprechend hohen Genauigkeit des zu ermittelnden Strömungspotentials bzw. Seta-Potentials wird gemäß einer weiters bevorzugten Ausführungsform vorgeschlagen, daß das Strömungspotential mit einer gegenüber der Druckfrequenz erhöhten Abtastrate ermittelt wird, wobei gemäß einer besonders bevorzugten Ausführungsform vorgeschlagen wird, daß das Strömungspotential wenigstens 20 mal, insbesondere wenigstens 50 mal pro Änderung der Druckfrequenz ermittelt wird.

zur Lösung der eingangs genannten Aufgaben ist darüber hinaus eine Vorrichtung der eingangs genannten Art im wesentlichen dadurch gekennzeichnet, daß die Elektroden das Volumen der Meßzelle begrenzen, daß eine der Elektroden mit einem Antrieb zur Änderung des Volumens der Meßzelle verbunden ist, daß der Druck der Flüssigkeit in der Meßzelle periodisch veränderbar oder oszillierbar ist und der Druck und das Strömungspotential einer Aufzeichnungs- und/oder Auswerteeinheit übermittelt sind. Es läßt sich somit mit einem einfachen Aufbau einer sich ändernden Druckbeaufschlagung der in des Meßzelle aufgenommenen Flüssigkeitsvolumens das Auslangen finden, wobei neben dem Vorsehen einer sich periodisch ändernden bzw. oszillierenden Druckbeaufschlagung der Flüssigkeit in der Meßzelle der jeweilige Druck und das Strömungspotential in einfacher Weise aufgezeichnet bzw. ermittelt werden können und zur weiteren Bestimmung des Zeta-Potentials einer Aufzeichnungs-und/oder Auswerteeinheit übermittelt werden.

Zur Erzielung eines definierten Antriebs, welcher unmittelbar zur Ermittlung des jeweils herrschenden Drucks herangezogen werden kann, wird gemäß einer weiters bevorzugten Ausführungsform vorgeschlagen, daß der Antrieb von einem an einem Exzenterantrieb gelagerten Druckkolben gebildet ist.

Eine weitere Möglichkeit zur Ausbildung einer sich ändernden Druckbeaufschlagung ist die Bildung eines entsprechenden Über- oder Unterdrucks auf einer Seite der Meßzelle, im Vergleich zur zweiten Seite der Meßzelle.

Anstelle einer unmittelbaren Ableitung des Drucks aus der bekannten Bewegung des Antriebs zur Aufbringung der Druckbeaufschlagung auf die in der Meßzelle enthaltenen Flüssigkeit kann gemäß einer weiters bevorzugten Ausführungsform vorgesehen sein, daß in bzw. an der Meßzelle ein Drucksensor vorgesehen ist, wobei ein derartiger Drucksensor selbstverständlich auch zusätzlich zur Erhöhung der Genauigkeit der Meßwerte eingesetzt werden kann.

Zur Anpassung an unterschiedliche Einsatzzwecke wird darüber hinaus vorgeschlagen, daß die Meßzelle von einer Kapillare gebildet wird, welche mit unterschiedlichen Oberflächenmembranen versehen ist, wie dies einer weiters bevorzugten Ausführungsform der erfindungsgemäßen Vorrichtung entspricht.

Die Erfindung wird nachfolgend anhand von in der beiliegenden Zeichnung schematisch dargestellten Ausführungsbeispielen näher erläutert. In dieser zeigen:
Fig. 1 eine schematische Ansicht einer erfindungsgemäßen Vorrichtung zur Durchführung des erfindungsgemäßen Verfahrens ;
Fig. 2 ein Diagramm des ermittelten Potentials gegenüber der Zeit bei sich änderndem Druck an einer standardisierten Flüssigkeit;
Fig. 3 eine Darstellung des Potentials gegenüber dem Druck zu der Messung gemäß Fig. 2; und
Fig. 4 ein Diagramm einer Mehrzahl von Messungen zur nachfolgenden Ermittlung des Strömungspotentials bzw. Zeta-Potentials an verquollenen Baumwollfasern, wobei ähnlich zur Darstellung gemäß Fig. 2 wieder das Potential in Abhängigkeit von der zeit bei unterschiedlichen Frequenzen dargestellt ist.

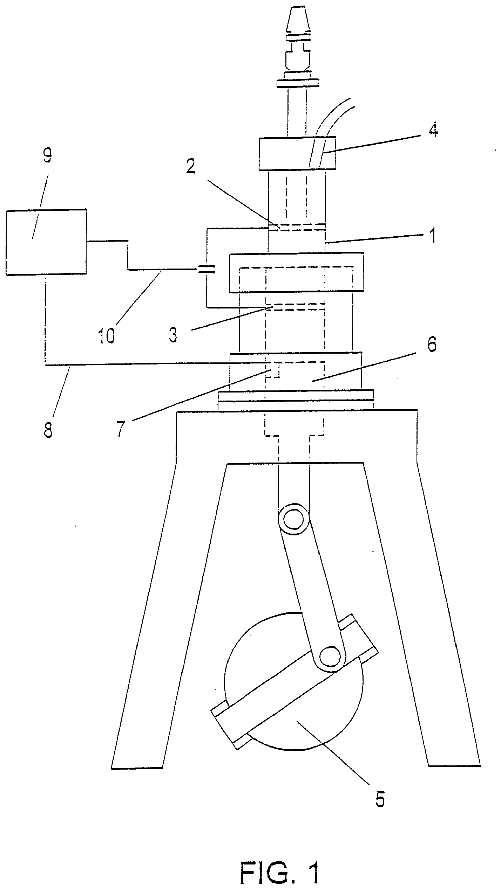

In Fig. 1 ist allgemein mit 1 eine Meßzelle bezeichnet, welche beispielsweise aus Plexiglas besteht, wobei darüber hinaus zwei Elektroden 2 und 3 vorgesehen sind, welche das Volumen der Meßzelle 1 begrenzen. Über eine Zuleitung 4 erfolgt eine Zufuhr der zu untersuchenden Flüssigkeit in den Bereich der Meßzelle 1, wobei weiters ersichtlich ist, daß die in Fig. 1 dargestellte, untere Elektrode 3 über einen Exzenterantrieb 5 und einen damit verbundenen Kolben 6 zu einer hin- und hergehenden Bewegung antreibbar ist, wodurch das Volumen in der Meßzelle 1 einer oszillierenden bzw. sich periodisch ändernden Druckbeaufschlagung unterworfen wird.

Im Kolben 6 kann unmittelbar ein Drucksensor integriert sein, wie dies mit 7 angedeutet ist, oder es kann aus der bekannten Bewegung des Exzenterantriebs 5 und somit des Kolbens 6 in Relation zu dem bekannten Volumen der Meßzelle 1 der in der Meßzelle 1 herrschende, sich periodisch ändernde bzw. oszillierende Druck unmittelbar ermittelt werden.

Der vom Drucksensor 7 ermittelte Druck wird über eine schematische Leitung 8 einer Auswerte- und Aufzeichnungseinheit 9 zugeführt, wobei dieser Auswerte- und Aufzeichnungseinheit 9 darüber hinaus zumindest das an den Elektroden 2 und 3 vorliegende Potential bzw. der Strom über eine Leitung 10 zugeführt wird.

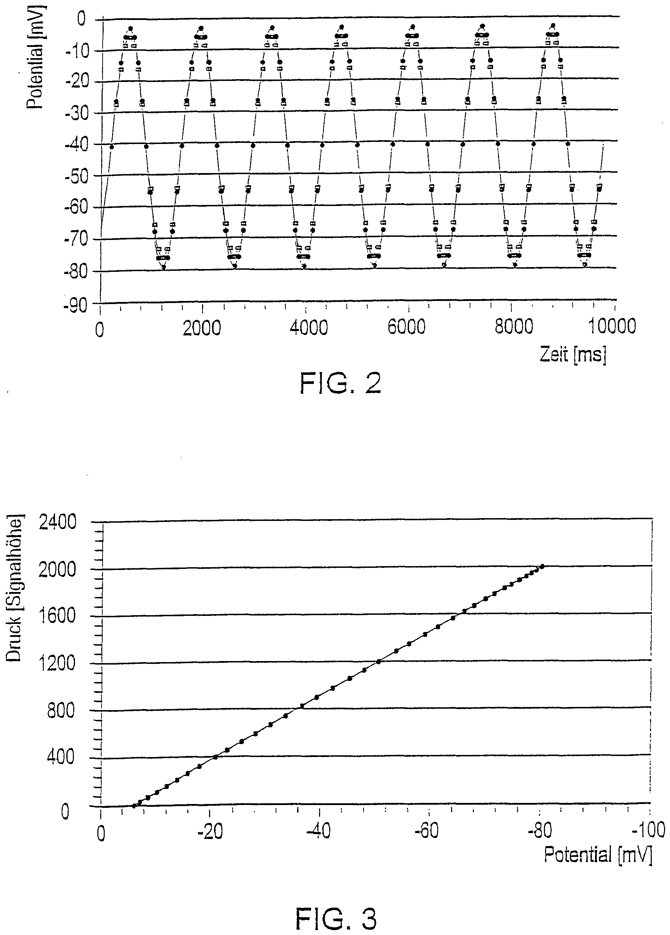

Bei der in Fig. 1 gezeigten Vorrichtung läßt sich beispielsweise ein sich mit der zeit änderndes Potential ermitteln, wie dies in Fig. 2 ersichtlich ist. Die Aufnahme der in Fig. 2 dargestellte Messung erfolgte an einer standardisierten Probe zur Überprüfung der Funktionstüchtigkeit bzw. -fähigkeit der in Fig. 1 dargestellten Vorrichtung, wobei als Frequenz für die oszillierende bzw. sich periodisch ändernde Druckbeaufschlagung knapp 1 Hz gewählt wurde.

In Fig. 2 ist hiebei neben den Meßpunkten auch eine Filtrat- bzw. Anpassungskurve bzw. Kurve einer theoretischen Berechnung der erwarteten Änderung des Potentials in Abhängigkeit von der Zeit und somit in Abhängigkeit von dem sich zeitlich ändernden Druck dargestellt, wobei ersichtlich ist, daß die theoretische Voraussage gut mit den experimentell ermittelten Werten übereinstimmt.

Abgeleitet aus den in Fig. 2 dargestellten Daten des Potentials in Abhängigkeit von der Zeit ist in Fig. 3 das Potential relativ zum Druck dargestellt, wobei der Druck entweder über den Drucksensor 7 oder aus der bekannten Bewegung des Kolbens 6 sowie der Elektrode 3 über den Exzenterantrieb 5 ermittelbar ist. Aus der sich ergebenden Geraden ist ersichtlich, daß der erwartete, lineare Zusammenhang zwischen dem sich ändernden Druck und dem Potential, welches in unmittelbarem Zusammenhang mit dem Zeta-Potential steht, eine einfache Auswertung möglich macht, wobei weiters ersichtlich ist, daß in sehr kurzer Zeit eine Vielzahl von Meßzyklen bei der oszillierenden bzw. sich periodisch ändernden Druckbeaufschlagung durchführbar ist und somit eine genaue Auswertung durch das Vorhandensein einer Vielzahl von Meßdaten möglich wird. Dies steht in unmittelbarem Gegensatz zu bekannten Ausführungen, wobei eine überaus große Menge einer zu untersuchenden Flüssigkeit durch eine Meßzelle bei jeweils unterschiedlichem, angelegtem Druck durchgeleitet werden mußte.

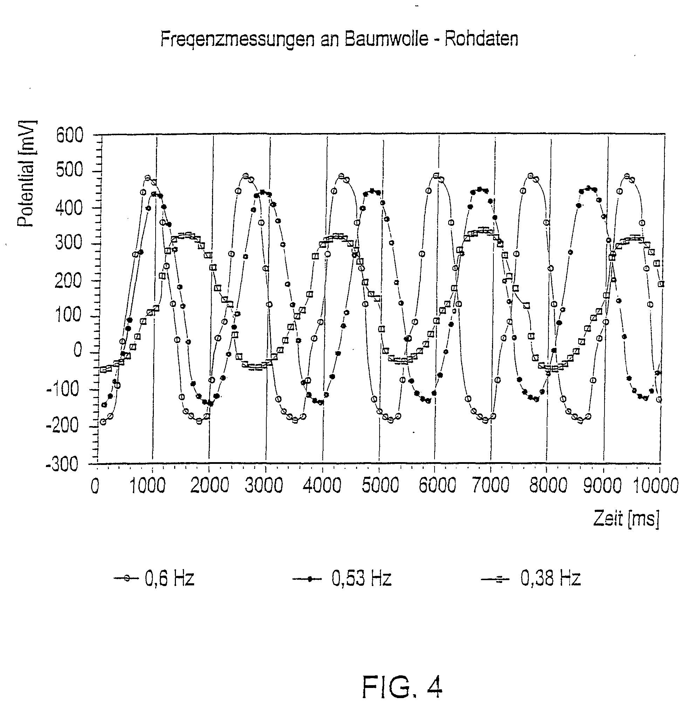

In Fig. 4 ist eine Messung bei unterschiedlichen Frequenzen an in destilliertem Wasser gequollenen Baumwollfasern gezeigt, wobei ersichtlich ist, daß für die angegebenen drei unterschiedlichen Frequenzen unterschiedliche Meßwerte für das Potential ermittelt werden konnten.

Ähnlich wie bei der Auswertung der Daten gemäß den Fig. 2 und 3 läßt sich in weiterer Folge auch aus den Daten gemäß Fig. 4 ein im wesentlichen linearer Zusammenhang zwischen dem Druck und dem Potential ermitteln, woraus wiederum das Zeta-Potential ermittelbar ist, welches beispielsweise einen unmittelbaren Hinweis auf die Konsistenz der untersuchten Baumwollfasern ergibt.

Es ist unmittelbar einsichtig, daß wiederum in sehr kurzer Zeit durch die Ermittlung einer Vielzahl von Meßpunkten eine äußerst genaue Auswertung bei stark variierendem Druck ermöglicht wird.

Anstelle des in Fig. 1 gezeigten Exzenterantriebs 5 zur Erzielung einer oszillierenden bzw. sich periodisch ändernden Druckbeaufschlagung könnte als alternativer Antrieb ein elektrodynamischer Schwingerreger Verwendung finden, wobei der Meßzelle, in welcher die Elektroden angeordnet sind, eine Kammer vorzulagern wäre, in welcher das notwendige Volumen einer entsprechenden oszillierenden bzw. sich periodisch ändernden Druckbeaufschlagung unterworfen wird.

Anstelle der gezeigten, sinusförmigen Druckänderung können selbstverständlich auch insbesondere im Zusammenhang mit einer vereinfachten und verbesserten Auswertung andere sich periodisch ändernde oder oszillierende Drücke auf die zu untersuchende Flüssigkeit angewandt bzw. aufgebracht werden.

## Patentansprüche

1. Verfahren zur Bestimmung des Strömungspotentials bzw. Zeta-Potentials zur Charakterisierung des Oberflächenladungsverhaltens von makroskopischen Festkörpern in einer Meßzelle (1), wobei eine Elektrolytlösung relativ zum Festkörper mit sich änderndem Druck bewegt wird, **dadurch gekennzeichnet, daß** die Elektrolytlösung einer oszillierenden bzw. sich periodisch mit einer Frequenz von maximal 100 Hz, insbesondere maximal 20 Hz ändernden Druckbeaufschlagung unterworfen wird und der jeweilige Druck und das Strömungspotential ermittelt bzw. aufgezeichnet werden.

2. Verfahren nach Anspruch 1, **dadurch gekennzeichnet, daß** die oszillierende bzw. sich ändernde Druckbeaufschlagung durch einen über einen Exzenter (5) angetriebenen Kolben (6) oder einen insbesondere elektrodynamisch angetriebenen Schwingerreger aufgebracht wird.

3. Verfahren nach Anspruch 1 oder 2, **dadurch gekennzeichnet, daß** die oszillierende bzw. sich ändernde Druckbeaufschlagung durch einen Über- bzw. Unterdruck an einer Seite der Meßzelle (1) im Vergleich zur anderen Seite der Meßzelle (1) aufgebracht wird.

4. verfahren nach Anspruch 1, 2 oder 3, **dadurch gekennzeichnet, daß** das Strömungspotential mit einer gegenüber der Druckfrequenz erhöhten Abtastrate ermittelt wird.

5. Verfahren nach Anspruch 4, **dadurch gekennzeichnet, daß** das Strömungspotential wenigstens 20 mal, insbesondere wenigstens 50 mal pro Änderung der Druckfrequenz ermittelt wird.

6. Vorrichtung zur Ermittlung des Strömungspotentials bzw. Zeta-Potentials zur Charakterisierung des Oberflächenladungsverhaltens von makroskopischen Festkörpern, wobei in einer Meßzelle (1) zur Aufnahme dieser makroskopischen Festkörper sowie einer Elektrolytlösung zwei Elektroden (2, 3) vorgesehen sind und die Elektrolytlösung einer Druckbeaufschlagung unterworfen ist, **dadurch gekennzeichnet, daß** die Elektroden (2, 3) das Volumen der Meßzelle (1) begrenzen und daß eine der Elektroden (3) mit einem Antrieb (5, 6) zur Änderung des Volumens der Meßzelle (1) verbunden ist und daß der Druck der Elektrolytlösung in der Meßzelle (1) periodisch veränderbar oder oszillierbar ist und der Druck und das Strömungspotential einer Aufzeichnungs- und/oder Auswerteeinheit (9) übermittelt werden.

7. Vorrichtung nach Anspruch 6, **dadurch gekennzeichnet, daß** der Antrieb von einem an einem Exzenterantrieb (5) gelagerten Druckkolben (6) gebildet ist.

8. Vorrichtung nach Anspruch 6, **dadurch gekennzeichnet, daß** die Strömung in der Meßzelle (1) durch eine oszillierende Druckdifferenz zwischen Ein- und Auslaß der Meßzelle erzwungen wird.

9. Vorrichtung nach Anspruch 6, 7 oder 8, **dadurch gekennzeichnet, daß** in bzw. an der Meßzelle (1) ein Drucksensor (7) vorgesehen ist.

10. Vorrichtung nach einem der Ansprüche 6 bis 8, **dadurch gekennzeichnet, daß** die Meßzelle (1) von einer Kapillare gebildet wird, welche mit unterschiedlichen Oberflächenmembranen versehen ist.

## Claims

1. Method for determining the streaming potential or zeta-potential in order to characterise the surface charge behaviour of macroscopic solid bodies in a measuring cell (1),
wherein an
electrolyte solution under a changing pressure is moved relative to the solid body, **characterised in that** the electrolyte solution is subjected to an oscillating or periodically changing pressurisation with a frequency of maximum 100 Hz, particularly 20 Hz, and the relevant pressure and the streaming potential are determined or recorded.

2. Method according to claim 1, **characterised in that** the oscillating or changing pressurisation is applied by a piston (6) driven by an eccentric (5) or by a shaker that in particular is driven electrodynamically.

3. Method according to claim 1 or 2, **characterised in that** the oscillating or changing pressurisation is applied on one side of the measuring cell (1) by an over pressure or reduced pressure in comparison to the other side of the measuring cell (1).

4. Method according to claim 1, 2 or 3, **characterised in that** the streaming potential is determined with a scanning frequency that is higher than the pressure frequency.

5. Method according to claim 4, **characterised in that** the streaming potential is determined at least 20 times, in particular at least 50 times, per change of the pressure frequency.

6. Device for determining the streaming potential or zeta potential in order to characterise the surface charge behaviour of macroscopic solid bodies, wherein two electrodes (2, 3) are provided in a measuring cell (1) that receives these macroscopic solid bodies as well as an electrolyte solution, and the electrolyte solution is subjected to a pressurisation, **characterised in that** the electrodes (2, 3) confine the volume of the measuring cell (1), and that one of the electrodes (3) is connected to a drive(5, 6) in order to change the volume of the measuring cell (1), and that the pressure of the electrolyte solution in the measuring cell (1) can be periodically changed or oscillated, and the pressure and the streaming potential are transmitted to a recording and/or evaluation unit (9).

7. Device according to claim 6, **characterised in that** the drive is formed from a pressure piston (6) mounted on an eccentric drive (5).

8. Device according to claim 6, **characterised in that** the flow in the measuring cell (1) is forced by an oscillating pressure difference between the inlet and outlet of the measuring cell.

9. Device according to claim 6, 7 or 8, **characterised in that** a pressure sensor (7) is provided in or on the measuring cell (1).

10. Device according to one of claims 6 to 8, **characterised in that** the measuring cell (1) is formed from a capillary that is equipped with different surface membranes.

## Revendications

1. Procédé pour déterminer le potentiel d'écoulement ou potentiel zêta pour la caractérisation du comportement de la charge superficielle de corps solides macroscopiques dans une cellule de mesure (1), dans lequel une solution électrolytique est déplacée par rapport au corps solide avec pression changeante, **caractérisé en ce que** la solution électrolytique est soumise à une sollicitation par pression oscillante ou changeant périodiquement avec une fréquence maximum de 100 Hz, en particulier maximum de 20 Hz et la pression respective et le potentiel d'écoulement sont déterminés ou enregistrés.

2. Procédé selon la revendication 1, **caractérisé en ce que** la sollicitation par pression oscillante ou changeante est appliquée par un piston (6) entraîné par le biais d'un excentrique (5) ou par un excitateur d'oscillations en particulier à entraînement électrodynamique.

3. Procédé selon la revendication 1 ou 2, **caractérisé en ce que** la sollicitation par pression oscillante ou changeante est appliquée par une surpression ou sous-pression au niveau d'un côté de la cellule de mesure (1) par rapport à l'autre côté de la cellule de mesure (1).

4. Procédé selon la revendication 1, 2 ou 3, **caractérisé en ce que** le potentiel d'écoulement est déterminé avec une fréquence de balayage accrue par rapport à la fréquence de pression.

5. Procédé selon la revendication 4, **caractérisé en ce que** le potentiel d'écoulement est déterminé au moins 20 fois, en particulier au moins 50 fois par changement de la fréquence de pression.

6. Dispositif pour déterminer le potentiel d'écoulement ou potentiel zêta pour la caractérisation du comportement de la charge superficielle de corps solides macroscopiques, dans lequel deux électrodes (2, 3) sont prévues dans une cellule de mesure (1) pour la réception de ces corps solides macroscopiques ainsi que d'une solution électrolytique et la solution électrolytique est soumise à une sollicitation par pression, **caractérisé en ce que** les électrodes (2, 3) limitent le volume de la cellule de mesure (1) et qu'une des électrodes (3) est reliée à un entraînement (5, 6) pour la modification du volume de la cellule de mesure (1) et que la pression de la solution électrolytique peut osciller ou peut être modifiée périodiquement dans la cellule de mesure (1) et la pression et le potentiel d'écoulement d'une unité d'enregistrement et/ou d'évaluation (9) sont transmis.

7. Dispositif selon la revendication 6, **caractérisé en ce que** l'entraînement est formé par un piston de pression (6) logé au niveau d'un entraînement d'excentrique (5).

8. Dispositif selon la revendication 6, **caractérisé en ce que** l'écoulement dans la cellule de mesure (1) est forcé par une différence de pression oscillante entre l'entrée et la sortie de la cellule de mesure.

9. Dispositif selon la revendication 6, 7 ou 8, **caractérisé en ce qu'**un capteur de pression (7) est prévu dans ou au niveau de la cellule de mesure (1).

10. Dispositif selon l'une quelconque des revendications 6 à 8, **caractérisé en ce que** la cellule de mesure (1) est formée par un capillaire, qui est doté de différentes membranes superficielles.
